(19) Europäisches Patentamt
European Patent Office
Office européen des brevets

(11) Publication number : **0 269 748 B1**

(12) # EUROPEAN PATENT SPECIFICATION

(45) Date of publication of patent specification : **15.07.92 Bulletin 92/29**

(51) Int. Cl.$^5$ : **C08L 53/02,** C08L 71/02, C08L 77/00

(21) Application number : **87903410.6**

(22) Date of filing : **18.05.87**

(86) International application number : **PCT/JP87/00315**

(87) International publication number : **WO 87/07285 03.12.87 Gazette 87/27**

(54) **POLYPHASE STRUCTURE AND PROCESS FOR ITS PRODUCTION.**

(30) Priority : **20.05.86 JP 115529/86**

(43) Date of publication of application : **08.06.88 Bulletin 88/23**

(45) Publication of the grant of the patent : **15.07.92 Bulletin 92/29**

(84) Designated Contracting States : **CH DE FR GB LI NL**

(56) References cited :
**JP-A- 5 649 753**
**JP-A-62 127 339**
**JP-A-62 151 456**
**JP-B- 5 933 614**
**JP-B- 6 110 494**

(73) Proprietor : **TORAY INDUSTRIES, INC.**
**2-1, Nihonbashi Muromachi 2-chome Chuo-ku**
**Tokyo 103 (JP)**

(72) Inventor : **CHIBA, Kazumasa**
**3-15, Fujie-cho**
**Nakamura-ku, Nagoya-shi Aichi 453 (JP)**
Inventor : **KISHIMOTO, Akihiko**
**1-1, Hagiwara-cho**
**Showa-ku, Nagoya-shi Aichi 466 (JP)**

(74) Representative : **Ellis, John Clifford Holgate et al**
**MEWBURN ELLIS & CO. 2/3 Cursitor Street**
**London EC4A 1BQ (GB)**

EP 0 269 748 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

A multi-phase resinous structure, and a process for preparing it

### Technical field

The present invention relates to a multi-phase resinous structure with a novel morphology and a process for preparing it.

### Background

In the area of resin materials for molding, the use of two or more polymers as a mixture has been practised for a long time. Especially to obtain an excellent material balanced in various properties by taking the advantages of the respective component polymers and complementing their disadvantages mutually, the technique of polymer blending is very effective, and hitherto a number of combinations of polymers have been examined.

The mechanical properties of polymer blend are greatly affected by the dispersed state of component polymers, i.e., morphological structure, as is well known, and to display excellent mechanical properties, it is important to achieve an optimum morphology.

Resin compositions composed of polyamide and polyphenylene ether are disclosed in US Patents Nos. 3,379,792, 4,338,321, etc., but are unpractically low in impact resisting strength. Resin compositions composed of polyamide, polyphenylene ether, specific compound and rubber enhanced in impact resisting strength are disclosed in US Patent No. 4,315,086, Japanese Patent Early-Disclosure No. 81-49753, etc. but are not excellent in balance of mechanical properties such as impact resisting strength, rigidity and heat resistance, and moldability, and those specifications do not refer to the morphology for making these properties excellent. Resin compositions composed of polyamide, polyphenylene ether, styrene and $\alpha,\beta$-unsaturated dicarboxylic acid anhydride copolymer, and rubber are disclosed in Japanese Patent Publication No. 84-33614, but the specification simply comprehensively states many kinds as rubbers and does not suggest any morphology excellent in mechanical properties such as impact resisting strength, rigidity and heat resistance, and moldability. In addition, the mechanical properties stated there are not satisfactory enough. Resin compositions composed of polyamide, polyphenylene ether polyphenylene ether modified by acyl groups and styreneethylene/butylene type rubber are disclosed in US Patent No. 4,600,741, but such a combination cannot achieve the optimum morphological structure, and has been found to be not good in the balance of mechanical properties and moldabilty.

In addition to the prior art referred to above, EP-A-024120 discloses a resin composition comprising (1) a resin comprising 5 to 95% by weight of a polyphenylene oxide and 95 to 5% by weight of a polyamide and (2) 0.01 to 30 parts by weight of (A) a liquid diene polymer, or (B) an epoxy compound or (C) a compound having in the molecule both (a) an ethylenic carbon-carbon double bond or a carbon-carbon triple bond and (b) a carboxylic acid, acid anhydride, acid amide, imido, carboxylic acid ester, amino or hydroxyl group, per 100 parts by weight of the total of polyphenylene oxide and polyamide resin (1).

### Disclosure of the invention

The object of the present invention is to provide a multi-phase resinous structure with a novel morphology for a three-component polymer blend consisting of polyamide, polyphenylene ether and rubber, which assures excellence in such mechanical properties as impact resisting strength, rigidity and heat resistance and moldability with good balance kept among them, and also to provide a process for preparing it.

The object of the present invention has been achieved by a multi-phase resinous structure, comprising

(A) 30 to 60 wt % of an aliphatic polyamide with a melt viscosity $\mu A$ between 5 and 5,000 $Nsm^{-2}$ (50 and 50,000 poise) inclusive

(B) 35 to 55 wt % of a polyphenylene ether with a melt viscosity $\mu B$ greater than $\mu A$ and lying between (500 and 50,000 $Nsm^{-2}$) (5,000 and 500,000 poise) inclusive ($\mu A$ and $\mu B$ being measured at a temperature of 300° C and at a shear rate of 1,000 $s^{-1}$), being at least one polymer, copolymer or modified (co)polymer selected from the polymers of monocyclic phenols represented by the following general formula

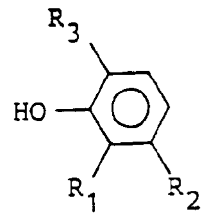

where $R_1$ stands for an alkyl group with 1 to 3 carbon atoms, and $R_2$ and $R_3$ stand for the hydrogen atom or an alkyl group with 1 to 3 carbon atoms)

(C) 5 to 20 wt % of an A-B-A′ type diene block copolymer with a diene component of 50 to 95 wt % (where A and A′ stand for polymerized vinyl aromatic hydrocarbon blocks of the same or different kinds, and B stands for a conjugated diene block), kneaded to make

(A) + (B) + (C) = 100 wt %, with matrix phase formed by the (A) aliphatic polyamide, primary dispersed phase formed by the (B) polyphenylene ether to be dispersed in the matrix phase, and secondary dispersed phase formed by the (C) diene block copolymer, to be dispersed further in the primary dispersed phase.

Furthermore, the object of the present invention has been achieved by a process for preparing a multi-phase resinous structure with matrix phase formed by (A) an aliphatic polyamide, primary dispersed phase formed by (B) a polyphenylene ether dispersed in the matrix phase, and secondary dispersed phase further dispersed in the primary dispersed phase formed by (C) a diene block copolymer, comprising the step of melting and kneading the components (A), (B) and (C) referred to in claim 1 in the proportions referred to in that claim to make (A) + (B) + (C) = 100 wt %, at a shear rate of 100 $sec^{-1}$ or more and at a temperature of 270 to 340° C, using an extruder.

Brief description of the drawings

Fig. 1 is a photograph showing a sectional structure of the multi-phase resinous structure obtained in Example 1, taken with a transmission type electron microscope.

Fig. 2 is a photograph showing a sectional structure of the multi-phase resinous structure obtained in Example 10, taken with a transmission type electron microscope.

The most preferred embodiments for executing the present invention

The present invention is described below in detail.

The multi-phase resinous structure of the present invention contains aliphatic polyamide, polyphenylene ether and A-B-A′ type diene block copolymer.

The (A) aliphatic polyamide used in the present invention can be selected, for example, from polycaproamide (nylon 6), polyhexamethylene adipamide (nylon 66), polyhexamethylene sebacamide (nylon 610), polyhexamethylene dodecamide (nylon 612), polyundecanamide (nylon 11), polydodecanamide (nylon 12), their copolymerized polyamides, and mixed polyamides. Among them nylon 6 and nylon 66 are preferably used in the present invention.

In the present invention, the melt viscosity of component polymers is important factors. The melt viscosity of the aliphatic polyamide used must be in a range from (5 to 5,000 $Nsm^{-2}$) (50 to 50,000 poise), preferably (10 to 4,500 $Nsm^{-2}$ 4,500 poise), more preferably (20 to 4,000 $Nsm^{-2}$) (200 to 40,000 poise) at a temperature of 300°C and at a shear rate of 1,000 $sec^{-1}$.

Aliphatic polyamides have respectively different melting points, and the molding temperature is set to suit each aliphatic polyamide, while the melt viscosity is different from temperature to temperature. The condition of 300°C temperature and 1,000 $sec^{-1}$ shear rate in the present invention is set, considering the condition in which polyamide, polyphenylene ether and rubber are actually kneaded by extruder.

When the melt viscosity of the aliphatic polyamide is less than (5 $Nsm^{-2}$) (50 poise) under said condition, it is different too much from the melt viscosity of the polyphenylene ether, to make the secondary dispersed phase of the polyphenylene ether dispersed coarsely resulting low impact strength unpreferably. On the other hand, when the melt viscosity of the aliphatic polyamide is more than (5,000 $Nsm^{-2}$) (50,000 poises), the multi-phase resinous structure of the present invention cannot be clearly formed, and a material excellent in impact resisting strength, rigidity and heat resistance with good balance kept among them cannot be obtained unpreferably.

The process for preparing the aliphatic polyamide and the other physical properties than the melt viscosity

such as the balance of end groups of the aliphatic polyamide are not especially limited, and an aliphatic polyamide prepared by ordinary melt polymerization can be used. With regard to the quantity of amino end groups and the quantity of carboxyl end groups of the polyamide, either a polyamide equal in quantity or a polyamide with either larger in quantity than the other can be used. However, a polyamide with the quantity of amino end groups smaller than the quantity of carboxyl end groups is preferable in view of stability.

The polyphenylene ether (B) used in the present invention is a polymer obtained by polymerizing a monocyclic phenol represented by the following general formula:

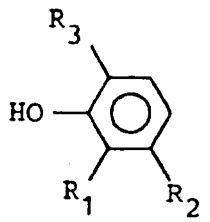

(where $R_1$ stands for an alkyl group with 1 to 3 carbon atoms, and $R_2$ and $R_3$ stand for the hydrogen atom or alkyl group with 1 to 3 carbon atoms respectively).

The monocyclic phenol represented by said general formula can be selected, for example, from 2,6-dimethylphenol, 2,6-diethylphenol, 2,6-dipropylphenol, 2-methyl-6-ethylphenol, 2-methyl-6-propylphenol, 2-ethyl-6-propylphenol, m-cresol, 2,3-dimethylphenol, 2,3-diethylphenol, 2,3-dipropylphenol, 2-methyl-3-ethylphenol, 2-methyl-3-propylphenol, 2-ethyl-3-methylphenol, 2-ethyl-3-propylphenol, 2-propyl-3-methylphenol, 2-propyl-3-ethylphenol, 2,3,6-trimethylphenol, 2,3,6-triethylphenol, 2,3,6-tripropylphenol, 2,6-dimethyl-3-ethylphenol, 2,6-dimethyl-3-propylphenol, etc. The polyphenylene ether obtained by polycondensing any of these monocyclic phenols can be poly(2,6-dimethyl-1,4-phenylene) ether, poly(2,6-diethyl-1,4-phenylene) ether, poly(2,6-dipropyl-1,4-phenylene) ether, poly(2-methyl-6-propyl-1,4-phenylene) ether, poly(2-ethyl-6-propyl-1,4-phenylene) ether, 2,6-dimethylphenol/2,3,6-trimethylphenol copolymer, 2,6-diethylphenol/2,3,6-trimethylphenol copolymer, 2,6-dipropylphenol/2,3,6-trimethylphenol copolymer, etc.

The melt viscosity of the polyphenylene ether used in the present invention must be in the range from (500 to 50,000 $Nsm^{-2}$) (5,000 to 500,000 poise), preferably (600 to 40,000 $Nsm^{-2}$) (6,000 to 400,000 poise), more preferably (100 to 30,000 $Nsm^{-2}$) (7,000 to 300,000 poise) at a temperature of 300°C and at a shear rate of 1,000 $sec^{-1}$.

An important condition required to display the multi-phase resinous structure specified in the present invention is to use a polyphenylene ether higher than the aliphatic polyamide in melt viscosity.

When the melt viscosity of the polyphenylene ether is not in the range from (500 to 50,000 $Nsm^{-2}$) (5,000 to 500,000 poises) at said condition, or when the polyphenylene ether is lower than the polyamide in melt viscosity, the multi-phase resinous structure of the present invention cannot be clearly formed unpreferably. When the melt viscosity is not as specified, the matrix phase and the primary dispersed phase may be reversed, depending on the blend composition, and in this case, impact resisting strength and moldability are extremely lowered, to lower practical value.

In the present invention, the polyphenylene ether includes a polyphenylene ether modified by a slight amount of an $\alpha,\beta$-unsaturated compound. The modified polyphenylene ether can be obtained by reaction of a polyphenylene ether and $\alpha,\beta$-unsaturated compound in the presence of a radical initiator. The $\alpha,\beta$-unsaturated compound can be selected, for example, from $\alpha,\beta$-unsaturated carboxylic acids and their anhydrides such as maleic anhydride, itaconic anhydride, glutaconic anhydride, citraconic anhydride, acrylic acid, methacrylic acid, maleic acid, fumaric acid, itaconic acid, crotonic acid, methylmaleic acid, methylfumaric acid, citraconic acid, methyl hydrogenmaleate and methyl hydrogenitaconate. The proper amount of the $\alpha,\beta$-unsaturated compound is from 0.1 to 10 wt % based on the weight of the polyphenylene ether. The radical initiator used for letting the $\alpha,\beta$-unsaturated compound react with the polyphenylene ether can be selected, for example, from benzoyl peroxide, dicumyl peroxide, di-t-butyl peroxide, t-butyl hydroperoxide, cumene hydroperoxide, dimethyl-di-(t-butylperoxy)-hexane, dimethyl-di-(t-butylperoxy)hexyne, azobisisobutyronitrile, azobis(cyclohexanecarbonitrile), azobis(dimethylvaleronitrrile), etc. When the amount of the radical initiator used is too small, the modification of the polyphenylene ether by the $\alpha,\beta$-unsaturated compound does not effectively progress, and even when too large, side reaction becomes conspicuous, and problems of foaming, coloring etc. tend to occur. Therefore, its amount should be preferably 0.005 to 2 wt %, more preferably 0.01 to 0.5 wt % based on the weight of the polyphenylene ether.

The modification of a polyphenylene ether is generally executed by mixing the polyphenylene ether, $\alpha,\beta$-

unsaturated compound and radical initiator, and melting and kneading at a temperature of 250 to 350°C for 30 seconds to 30 minutes. The kneading can be executed by an extruder, roll mill, kneader or any other mixer. The polyphenylene ether modified by an α,β-unsaturated compound is enhanced in the compatibility with the polyamide, and as a result, impact resisting strength is generally increased preferably.

The diene block copolymer used as the (C) component in the present invention is an A-B-A′ type block polymer composed of vinyl aromatic hydrocarbons and a conjugated diene. The end blocks A and A′ can be the same or different and are thermoplastic homopolymers or copolymers derived from vinyl aromatic hdyrocarbons having monocyclic or polycyclic in the aromatic portion, respectively. Such a vinyl aromatic hydrocarbon can be, for example, styrene, α-methylstyrene, vinyltoluene, vinylxylene, ethylvinylxylene, vinylnaphtalene or any of their mixtures.

The central block B is a homopolymer or copolymer of a conjugated diene, and cojugated diene can be selected, for example, from butadiene, isoprene, chloroprene and their mixtures.

The block copolymer can be prepared by any conven tional method.

For example, it can be prepared by any of the methods disclosed in US Patent Nos. 3,251,905, 3,231,635, etc.

Ordinary styrene-butadiene copolymer (SBR) which is obtained by copolymerization of a diene monomer and a vinyl aromatic hydrocarbon at random is not used as the (C) component of the present invention, even though it is copolymer of a conjugated diene.

Furthermore, rubbers containing a non-conjugated diene such as 1, 4-hexadiene, dicyclopentadiene or norbornadiene, etc., i.e., elastic rubbery materials called EPDM are not used as the (C) component of the present invention.

When said SBR or EPDM is used as the (C) component, the multi-phase structure specified in the present invention cannot be formed.

The amount of the diene component in the diene block copolymer should be 50 to 95 wt %, preferably 60 to 90 wt %.

In the present invention, the viscosity of the (C) diene block copolymer is not especially limited, but a copolymer having about (0.4 to 30 $Nsm^{-2}$) (400 to 30,000 CP) in solution viscosity when dissolved at a polymer concentration of 20 to 30 wt % in a solvent such as benzene or toluene, can be favorably used.

The multi-phase resinous structure defined in the present invention is a new conception which is different from the conventionally known morphology, and means a morphological structure in which primary dispersed phase exists in continuous matrix phase, with secondary dispersed phase existing in the primary dispersed phase and in which the secondary dispersed phase cannot be observed in the matrix phase.

In the present invention, the aliphatic polyamide forms the matrix phase; the polyphenylene ether, the primary dispersed phase; and the diene block copolymer, the secondary dispersed phase. The multi-phase resinous structure material is most favorable in the balance among impact resisting strength, rigidity, heat resistance and moldability, compared with other available multi-phase resinous structure materials.

The multi-phase resinous structure of the present invention can be confirmed by observation with an ordinary transmission type electron microscope.

For example, Figs. 1 and 2 are photographs showing sections of typical multi-phase resinous structure materials of the present invention, taken with the transmission type electron microscope.

To form the multi-phase resinous structure of the present invention, the kinds and quantities of the polymer components, the melt viscosities of the polymers, and kneading method are important factors. To form the multi-phase resinous structure, aliphatic polyamide, polyphenylene ether and diene block copolymer are a favorable combination.

The reason is surmised to relate to the mutual affinity of the respective component polymers. Basically, the secondary dispersed component have stronger affinity with the primary dispersed component than with the matrix component,

In more detail, when the primary dispersed component has cohesive energy very close to that of secondary dispersed component, a good multi-phase resinous structure is surmised to be formed.

Even when the secondary dispersed component has stronger affinity with the primary dispersed component than with the matrix component, separation between the secondary dispersed component and the primary dispersed component in polarity does not allow the secondary phase to be dispersed in the primary dispersed phase, and as a result, two components form independent dispersed phases in the matrix phase, as so called sea-isle-isle structure. In this case, the enhancement of impact resisting strength cannot be expected.

For example, when styrene-butadiene random copolymer (SBR), ethylene/propylene rubber (EPR) or ethylene/propylene/nonconjugated diene copolymer (EPDM) is used as the (C) component, to melt and knead the aliphatic polyamide and the polyphenylene ether, the dispersed phase of the polyphenylene ether and the dispersed phase of SBR, EPR or EPDM are separately dispersed in the polyamide matrix phase, to form a

sea-isle-isle structure, not to allow the multi-phase resinous structure of the present invention to be formed.

In the present invention, the matrix phase must be formed by an aliphatic polyamide. In general, the matrix phase is formed by the most containing component, but in the combination of the present invention, the polyphenylene ether should be blended as much as possible in view of enhanced heat resistance, still with aliphatic polyamide remaining as the matrix phase.

This requirement is met by the specified melt viscosities of the aliphatic polyamide and the polyphenylene ether, and the significance of the melt viscosities is as already above-described.

The multi-phase resinous structure of the present invention is composed of 30 to 60 wt % of an aliphatic polyamide, 35 to 55 wt % of a polyphenylene ether and 5 to 20 wt % of a diene block copolymer, preferably 35 to 55 wt % of an aliphatic polyamide, 38 to 52 wt % of a polyphenylene ether and 7 to 17 wt % of a diene block copolymer, more preferably 40 to 50 wt % of an aliphatic polyamide, 40 to 50 wt % of a polyphenylene ether and 10 to 15 wt % of a diene block copolymer.

Only when the composition is in the above range of ratios, a multi-phase resinous structure with mechanical properties high in practical value can be obtained. When the above range is not comformed to, a clear multi-phase resinous structure cannot be obtained, or the polyamide does not form the matrix phase while the polyphenylene ether does not form the primary dispersed phase, or even when the multi-phase resinous structure is formed, the mechanical properties of impact resistance, rigidity and heat resistance are not balanced, to lower the practical value unpreferably. When the maximum particle size of the primary dispersed phase in the multi-phase resinous structure of the present invention is too small, the crystallinity of the aliphatic polyamide of the matrix phase is impaired, and mechanical properties tend to be lowered. When too large, the surface appearance of the molded product tends to be degraded. Therefore, the maximum particle size of the polyphenylene ether should be preferably about 0.5 to 30 μm, more preferably 1 to 20 μ.

Since the secondary dispersed phase is dispersed in the primary dispersed phase, it is not always observed to be spheroidal or granular, and it is difficult to express the size numerically.

The condition for preparing the multi-phase resinous structure of the present invention cannot be specifically described, since various factors such as kinds, quantities, melt viscosities, etc. of the components are involved. For example, such a multi-phase resinous structure can be prepared by melting and kneading a mixture consisting of aliphatic polyamide, polyphenylene ether and diene block copolymer at a high shear rate of more than 100 $sec^{-1}$, preferably more than 300 $sec^{-1}$, more preferably more than 500 $sec^{-1}$ at a temperature of 270 to 340°C.

The machine most preferably used for the melt-kneading is the extruder. What can be used in the present invention is an extruder with a kneading portion capable of providing a high shear rate of more than about 100 $sec^{-1}$ by a screw. For example, a single screw extruder equipped with a screw called Unimelt type, multiple screw extruder equipped with engaged screws, Cokneader made by Buss, Switzerland, etc. can be preferably used.

When the mixture consisting of aliphatic polyamide, polyphenylene ether and diene block copolymer is not kneaded at a high shear rate, for example, if said mixture is fed into and molded by an ordinary plunger type injection molding machine, the multi-phase structure of the present invention may not be formed clearly, or a very rough morphology only may be formed, not to provide excellent mechanical properties unpreferably.

In the present invention, if the respective component polymers are melt-kneaded at said temperature and high shear rate, their kneading sequence is not especially limited. The three component polymers of the aliphatic polyamide, polyphenylene ether and diene block copolymer can be mixed at a time to be molten and kneaded, or two components can be kneaded at first, with the remaining one components kneaded subsequently, or two components can be fed into one feed port of one extruder, while the third component is fed into the extruder from another feed port. The melt viscosity of the material with the multi-phase resinous structure of the present invention thus obtained should be desirably (50 to 5,000 $Nsm^{-2}$) (500 to 50,000 poise), more preferably (10 to 4,000 $Nsm^{-2}$) (100 to 40,000 poise) at a temperature of 270 to 320°C and at a shear rate of 1,000 $sec^{-1}$.

The resin of the present invention can further contain other components such as a pigment, dye, reinforcing material, filler, heat resisting agent, anti-oxidant, weather resisting agent, lubricant, crystal nucleating agent, blocking inhibitor, mold releasing agent, plasticizer, flame retarder, antistatic agent, other polymers, etc., as far as they do not impair the morphology and mechanical properties.

As other additional polymers, conventional ones can be used if required, being, selected, for example, from polystyrene styrene/acrylonitrile copolymer, styrene/ maleic anhydride copolymer, styrene/N-phenylmaleimide copolymer, acrylonitrile/butadiene/styrene copolymer, polymethyl methacrylate, polycabonate, polybutylene terephhalate, polyethylene terephthalate, polyethylene, polypropylene, ethylene/propylene copolymer, ethylene/propylene/dichloropentadiene copolymer, etc.

The effect of the present invention is described below in more detail in reference to examples, but the present invention is not limited thereto or thereby.

The properties of the polymers and molded products described in the following present invention examples and comparative examples were evaluated according to the following methods:

(1) Melt viscosity: JIS K7210
(2) Tensile strength: ASTM D638
(3) Flexural properties: ASTM D790
(4) Izod impact strength: ASTM D256
(5) Heat distortion temperature: ASTM D648

Example 1

Substantially equimolar salts of hexamethylene-diamine and adipic acid were molten and polymerized, to prepare nylon 66. The melt viscosity of the nylon 66 was (300 $Nsm^{-2}$) (3,000 poise) at 300°C and at 1,000 $sec^{-1}$. 2,6-dimethylphenol was oxidized and polymerized in toluene by blowing oxygen, with copper chloride and dibutylamine as catalysts. The melt viscosity of the polyphenylene ether was (9,200 $Nsm^{-2}$) (92,000 poise) at 300°C and at 1,000 $sec^{-1}$. As the diene block copolymer, "Cariflex" TR1102 (styrene/butadiene/styrene block copolymer) made by Shell Chemical Co., Ltd. was used.

40 wt % of nylon 66, 45 wt % of the polyphenylene ether and 15 wt % of "Cariflex" TR1102 were mixed, and a twin-screw extruder with engaged screws rotating in the same direction was used to melt and knead at a temperature of 300°C and at a shear rate of 1,000 $sec^{-1}$, for pelletization. Very thin slices were cut out as sections from pelletes obtained here, to observe themorphological structure by a transmission type electron microscope. As a result, the multi-phase resinous structure of the present invention could be confirmed. Fig. 1 shows a photograph taken with a transmission type electron microscope.

As can be seen from Fig. 1, the maximum particle size of polyphenylene ether as the primary dispersed phase was about 10 μ, and "Cariflex" TR1102 as the secondary dispersed phase had been finely dispersed in the primary dispersed phase.

The melt viscosity of the pellets was (800 $Nsm^{-2}$) (8,000 poise) at 300°C and at 1,000 $sec^{-1}$.

The molten and kneaded pellets were dried in vacuo, and molded by an injection molding machine at a cylinder temperature of 290°C and at a mold temperature of 80°C into test pieces for measuring various mechanical properties. The mechanical properties evaluated are listed in Table 1. The material was found to be excellent in respective mechanical properties such as moldability represented by the melt viscosity of the product and the flowability during injection molding, rigidity represented by tensile strength, flexural strength and flexural modulus, impact resistance represented by Izod impact strength, heat resistance represented by heat distortion temperature, etc. with good balance kept among them, and thus to be very high in practical value.

Comparative example 1

Polyhexamethylene adipamide (nylon 66) of (6,00 $Nsm^{-2}$) (60,000 poise) in melt viscosity at 300°C and 1,000 $sec^{-1}$ was prepared. Polyphenylene ether of (1,000 $Nsm^{-2}$) (10,000 poise) at 300°C and at 1,000 $sec^{-1}$ was prepared. The nylon 66 and the polyphenylene ether obtained here and the "Cariflex" TR1102 used in Example 1, and molten and kneaded as done in Example 1, to obtain pellets. The morphological structure of the pellets obtained was not a clear multi-phase structure.

The mechanical properties were evaluated. As shown in Table 1, both impact resistance and moldability were unsatisfactory.

Comparative examples 2 to 4

The nylon 66, polyphenylene ether and "Cariflex" TR1102 used in Example 1 were mixed at the ratios shown in Table 1, and molten and kneaded as done in Example 1, and the morphology of the pellets obtained and the mechanical properties of injection molded test pieces were evaluated.

Since the composition ratios of the nylon, polyphenylene ether and diene block copolymer did not conform to the present invention, Comparative Example 2 was poor in impact resistance and heat resistance; Comparative Example 3 was not proper in the components of the multi-phase resinous structure and was remarkably poor in moldability and impact resistance and Comparative Example 4 was poor in rigidity and heat resistance. Thus, these comparative examples were unsatisfactory.

Comparative examples 5 and 6

Melting and kneading was executed as done in Example 1, to obtain pellets, except that ethylene/propylene/dicyclopentadiene copolymer (copolymerization ratio 80/15/5 wt %, EPDM rubber) or styrene butadiene copolymer (SBR rubber, "JSR" 1500 made by JSR, Ltd.) was used instead of "Cariflex" TR1102.

The morphological structures of the pellets obtained were not of multi-phase, and the polyphenylene ether and EPDM rubber or SBR rubber were dispersed respectively as independent dispersed phases (isle phases) in the nylon 66 matrix phase (sea phase). As for mechanical properties, Comparative Example 5 was poor in impact resistance and heat resistance, and Comparative Example 6 was poor in moldability and impact resistance as listed'in Table 1.

Examples 2 to 12

Operation was executed as done in Example 1, except that the polyamide, polyphenylene ether and diene block copolymer were changed in kind, properties, amount, etc., and the morphology of the pellets obtained and the mechanical properties of injection molded test pieces were evaluated, to obtain the results shown in Table 1. In every example shown in Table 1, a clearly formed multi-phase resinous structure could be confirmed, and each material was found to be excellent in such mechanical properties as impact resisting strength, rigidity and heat resistance with good balance kept among them.

Table 1

| | Present Invention Example 1 | Comparative Example 1 | Comparative Example 2 | Comparative Example 3 | Comparative Example 4 | Comparative Example 5 | Comparative Example 6 |
|---|---|---|---|---|---|---|---|
| (A) Aliphatic polyamide | | | | | | | |
| Kind | N-66 | → | → | → | → | → | → |
| μA ($Nsm^{-2}$) | 300 | 6,000 | 300 | → | → | → | → |
| Amount (wt %) | 40 | → | 70 | 20 | 35 | 40 | → |
| (B) Polyphenylene ether | | | | | | | |
| Kind | PPE | → | → | → | → | → | → |
| μB ($Nsm^{-2}$) | 9,200 | 1,000 | 6,200 | → | → | 9,200 | → |
| Amount (wt %) | 45 | → | 20 | 70 | 35 | 45 | → |
| (C) Rubber | | | | | | | |
| Kind | "Cariflex" TR1102 | → | → | → | → | EPDM | "JSR 1500" SBR |
| Amount (wt %) | 15 | → | 10 | 10 | 30 | 15 | → |
| Other additive | | | | | | | |
| Kind | - | - | - | - | - | - | - |
| Amount (wt %) | - | - | - | - | - | - | - |
| Melting and kneading machine | Twin-screw extruder | → | → | → | → | → | → |
| Morphological structure | Sea/isle/lake | Unclear | Sea/isle/lake | Sea/isle reversed | sea/isle/lake | sea/isle | → |
| Maximum particle size of isle phase | Approx. 10 | Approx. 100 | Approx. 10 | Approx. 70 | Approx. 25 | Approx. 80 | Approx. 60 |
| Melt viscosity of product (poise) | 8,000 | 30,000 | 3,500 | 86,000 | 6,500 | 8,500 | 15,000 |
| Measured temperature (°C) | 300 | → | → | → | → | → | → |
| Shear rate ($sec^{-1}$) | 1,000 | → | → | → | → | → | → |
| Flowability during injection molding | Good | No good | Good | No good | Good | Good | No good |
| Tensile strength ($kg/cm^2$) | 570 | 600 | 600 | 620 | 460 | 550 | 510 |
| Flexural strength ($kg/cm^2$) | 850 | 850 | 800 | 850 | 600 | 850 | 700 |
| Flexural modulus ($kg/cm^2$) | 21,000 | 20,000 | 20,000 | 22,000 | 15,000 | 21,000 | 20,000 |
| Izod Impact strength (kg•cm/cm•notch) | 15 | 2 | 5 | 2 | 50 | 7 | 4 |
| Heat distortion temperature (°C) | 160 | 150 | 85 | 155 | 120 | 135 | |

Table 1 (Continued)

| | Present Invention Example | | | | | | | | | | |
|---|---|---|---|---|---|---|---|---|---|---|---|
| | 2 | 3 | 4 | 5 | 6 | 7 | 8 | 9 | 10 | 11 | 12 |
| (A) Aliphatic polyamide | | | | | | | | | | | |
| Kind | → | N-6 | N-66 | → | N-612 | N-66 | → | → | → | N-6 | → |
| μA ($Nsm^{-2}$) | 200 | 2,200 | 300 | → | 500 | 300 | → | → | → | 750 | → |
| Amount (wt %) | 45 | 40 | 45 | → | → | 40 | → | → | 45 | 40 | → |
| (B) Polyphenylene ether | | | | | | | | | | | |
| Kind | → | → | → | PPE/PTE | → | PPE | → | → | MLA modified PPE | → | → |
| μB ($Nsm^{-2}$) | 2,500 | 3,000 | 8,000 | 10,500 | 6,000 | 9,000 | → | → | 5,800 | → | → |
| Amount (wt %) | 40 | 40 | 42 | 40 | → | 40 | → | → | 45 | → | → |
| (C) Rubber | | | | | | | | | | | |
| Kind | "Cariflex" TR1102 | "Sorprene" T414 | → | "Cariflex" TR1101 | "Cariflex" TR1107 | "Cariflex" TR1101 | → | → | → | → | → |
| Amount (wt %) | 15 | 20 | 13 | 15 | → | 15 | → | → | 10 | 15 | → |
| Other additive | | | | | | | | | | | |
| Kind | - | - | - | - | - | Poly ST/MLA | ABS | MLA | - | - | - |
| Amount (wt %) | - | - | - | - | - | 5 | - | 3 | - | - | - |
| Melting and kneading machine | → | → | → | → | Cockneader made by Buss | Twin-screw extruder | → | → | → | → | Unimelt single screw extruder |
| Morphological structure | Sea/isle/lake | → | → | → | → | → | → | → | → | → | → |
| Maximum particle size of isle phase | Approx.20 | Approx.15 | Approx.20 | Approx.15 | Approx.10 | Approx. 8 | Approx.25 | Approx.12 | Approx.1.5 | Approx. 2 | Approx. 5 |
| Melt viscosity of product (poise) | 5,000 | 17,000 | 8,000 | 9,200 | 8,500 | 7,500 | 7,800 | 6,000 | 8,500 | 9,800 | 9,000 |
| Measured temperature (°C) | → | → | → | → | → | → | → | → | → | → | → |
| Shear rate ($sec^{-1}$) | → | → | → | → | → | → | → | → | → | → | → |
| Flowability during injection molding | Good | | Good | Good | Good | Good | Good | Good | Good | Good | Good |
| Tensile strength ($kg/cm^2$) | 550 | 500 | 600 | 590 | 580 | 560 | 600 | 580 | 600 | 550 | 570 |
| Flexural strength ($kg/cm^2$) | 820 | 780 | 870 | 840 | 840 | 800 | 850 | 820 | 850 | 800 | 820 |
| Flexural modulus ($kg/cm^2$) | 20,500 | 19,000 | 21,300 | 21,000 | 20,800 | 19,800 | 21,300 | 20,500 | 21,000 | 19,500 | 20,200 |
| Izod impact strength (kg•cm/cm•notch) | 25 | 21 | 15 | 18 | 20 | 20 | 11 | 15 | 41 | 55 | 40 |
| Heat distortion temperature (°C) | 155 | 150 | 161 | 158 | 155 | 150 | 159 | 158 | 157 | 149 | 155 |

Notes:
○ N-66: Nylon 66
N-6: Nylon 6
N-612: Nylon 612
PPE: Poly(2,6-dimethylphenol)
PPE/PTE: Poly(2,6-dimethylphenol/2,3,6-trimethylphenol: 95/5 mol %) copolymer
"Cariflex"® TR1102 and TR1101: Styrene/butadiene/styrene block copolymer made by Shell chemical CO., Ltd.
"Cariflex" TR1107: Styrene/isoprene/styrene block copolymer made by Shell Chemical Co., Ltd.
"Sorprene"® T414: Styrene/butadiene block copolymer made by Asahi Chemical Industry Co., Ltd.
"JSR 1500" SBR: Poly(styrene/butadiene) random copolymer made by Japan Synthetic Rubber Co., Ltd.
EPDM: Poly(styrene/propylene/dicyclopentadiene: 80/15/5 wt %) copolymer
Poly ST/MLA: Poly(styrene/maleic anhydride: 80/20 wt %) copolymer
ABS: "Toyolac"® T100 acrylonitrile/butadiene/styrene copolymer made by Toray Industries, Inc.
MLA: Maleic anhydride
MLA Modified PPE: Maleic anhydride modified poly(2,6-dimethylphenol), containing 1.5 wt % (based on PPE) of maleic anhydride, by used of 0.08 wt % (based on PPE) of cumene hydroperoxide
○ Each underlined statement refers to something not in conformity with the present invention or any mechanical property falling short of the level intended in the present invention. ,
○ In the morphological structure, the matrix phase is called sea, the primary dispersed phase, isle, and the secondary dispersed phase, lake.
○ Each → mark means the same as the statement given on the left column.

Industrial applicability

The multi-phase resinous structure of the present invention can be molded by injection, extrusion, blowing or compression with the multi-phase resinous structure of the present invention kept, and the molded products can be used as various automobile parts, machine parts, electric and electronic parts, general merchandise, for their excellency in impact resistance, rigidity, heat resistance and moldability.

## Claims

1. A multi-phase resinous structure, comprising
(A) 30 to 60 wt % of an aliphatic polyamide with a melt viscosity μA between 5 and 5,000 $Nsm^{-2}$ (50 and 50,000 poise) inclusive.
(B) 35 to 55 wt % of a polyphenylene ether with a melt viscosity μB greater than μA and lying between (500 and 50,000 $Nsm^{-2}$) (5,000 and 500,000 poise) inclusive (μA and μB being measured at a temperature of 300° C and at a shear rate of 1,000 $s^{-1}$), being at least one polymer, copolymer or modified (co)polymer selected from the polymers of monocyclic phenols represented by the following general formula

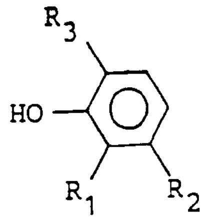

where $R_1$ stands for an alkyl group with 1 to 3 carbon atoms, and $R_2$ and $R_3$ stand for the hydrogen atom or an alkyl group with 1 to 3 carbon atoms)

(C) 5 to 20 wt % of an A-B-A′ type diene block copolymer with a diene component of 50 to 95 wt % (where A and A′ stand for polymerized vinyl aromatic hydrocarbon blocks of the same or different kinds, and B stands for a conjugated diene block), kneaded to make

(A) + (B) + (C) = 100 wt %, with matrix phase formed by the (A) aliphatic polyamide, primary dispersed phase formed by the (B) polyphenylene ether to be dispersed in the matrix phase, and secondary dispersed phase formed by the (C) diene block copolymer, to be dispersed further in the primary dispersed phase.

2. A multi-phase resinous structure according to claim 1, wherein μA and μB satisfy the following formulae:

(10 $Nsm^{-2}$) (100 poise) ≦ μA ≦ (4,500 $Nsm^{-2}$) (45,000 poise)

(600 $Nsm^{-2}$) (6,000 poise) ≦ μB ≦ (40,000 $Nsm^{-2}$) (400,000 poise)

3. A multi-phase resinous structure according to claim 2, wherein μA and μB satisfy the following formulae:

(20 $Nsm^{-2}$) (200 poise ≦ μA ≦ (4,000 $Nsm^{-2}$) (40,000 poise)

(700 $Nsm^{-2}$) (7,000 poise) ≦ μB ≦ (30,000 $Nsm^{-2}$) (300,000 poise)

4. A multi-phase resinous structure according to any preceding claim wherein the (A) aliphatic polyamide is at least one selected from polycaproamide (nylon 6), polyhexamethylene adipamide (nylon 66), polyhexamethylene sebacamide (nylon 610), polyhexamethylene dodecamide (nylon 612), polyundecanamide (nylon 11), polydodecanamide (nylon 12), their copolyamides and mixed polyamides.

5. A multi-phase resinous structure according to claim 4, wherein the aliphatic polyamide is nylon 6 and /or nylon 66.

6. A multi-phase resinous structure according to any preceding claim wherein the (B) polyphenylene ether is at least one selected from poly(2,6-dimethyl-1,4-phenylene) ether, poly(2,6-diethyl-1,4-phenylene) ether, poly(2,6-dipropyl-1,4-phenylene) ether, poly(2-methyl-6-propyl-1,4-phenylene) ether, poly(2-ethyl-6-propyl-1,4-phenylene) ether, 2,6-dimethylphenol/2,3,6-trimethylphenol copolymer, 2,6-diethylphenol/2,3,6-trimethylphenol copolymer, and 2,6-dipropylphenol/2,3,6-trimethylphenol copolymer.

7. A multi-phase resinous structure according to claim 6, wherein the (B) polyphenylene ether is poly(2,6-dimethyl-1,4-phenylene) ether and/or (2,6-dimethylphenol/2,3,6-trimethylphenol copolymer.

8. A multi-phase resinous structure according to claim 1, wherein the modified (co)polymer of a polyphenylene ether is obtained by letting an α,β-unsaturated compound react with a polyphenylene ether.

9. A multi-phase resinous structure according to claim 18, wherein the α,β-unsaturated compound is at least one selected from maleic anhydride, itaconic anhydride, glutaconic anhydride, citraconic anhydride, acrylic acid, metha- crylic acid, maleic acid, fumaric acid, itaconic acid, crotonic acid, methylmaleic acid, methylfumaric acid, citraconic acid, methyl hydrogenmaleate and methyl hydrogenitaconate, and is used in an amount of 0.1 to 10 wt % based on the weight of the polyphenylene ether.

10. A multi-phase resinous structure according to claim 8, wherein the modified polyphenylene ether (co) polymer is obtained by letting an α,β-unsaturated compound react with a polyphenylene ether in the presence of a radical initiator.

11. A multi-phase resinous structure according to claim 13, wherein the radical initiator is at least one selected from benzoyl peroxide, dicumyl peroxide, di-t-butyl peroxide, t-butyl hydroperoxide, cumene hydroperoxide, dimethyl-di-(t-butylperoxy)hexane, dimethyl-di-(t-butylperoxy)hexyne, azobisisobutyronitrile, azobis(cyclohexanecarbonitrile), and azobis (dimethylvaleronitrile).

12. A multi-phase resinous structure according to any preceding claim, wherein the A and A′ of the (C) A-B-A′ type diene block copolymer stand for polystyrene based blocks, and B stands for a polybutadiene based block.

13. A multi-phase resinous structure according to any of claims 1 to 11, wherein the A and A′ of the (C) A-B-A′ type diene block copolymer are polystyrene based blocks, and B stands for a polyisoprene based block.

14. A multi-phase resinous structure according to any preceding claim, which consists of 35 to 55 wt % of an aliphatic polyamide, 38 to 52 wt % of a polyphenylene ether and 7 to 17 wt % of an A-B-A′ diene block copolymer.

15. A multi-phase resinous structure according to claim 14, which consists of 40 to 50 wt % of an aliphatic polyamide, 40 to 50 wt % of a polyphenylene ether and 10 to 15 wt % of an A-B-A′ type diene block copolymer.

16. A multi-phase resinous structure according to any preceding claim, wherein the maximum particle size of the primary dispersed phase formed by a polyphenylene ether is in a range from about 0.5 to 30 μm.

17. A multi-phase resinous structure according to claim 16, wherein the maximum particle size of the primary dispersed phase formed by a polyphenylene ether is in a range from about 1 to 20 μ.

18. A process for preparing a multi-phase resinous structure with matrix phase formed by (A) an aliphatic polyamide, primary dispersed phase dispersed in the matrix formed by (B) a polyphenylene ether, and secondary dispersed phase dispersed further in the primary dispersed phase formed by (C) a diene block copolymer, comprising the step of melting and kneading the components (A), (B) and (C) referred to in claim 1 in the proportions referred to in that claim to make (A) + (B) + (C) = 100 wt %, at a shear rate of 100 $sec^{-1}$ or more and at a temperature of 270 to 340° C, using an extruder.

19. A process for preparing a multi-phase resinous structure according to claim 18, wherein the melting and kneading is executed at a shear rate of move than 300 $sec^{-1}$.

20. A process for preparing a multi-phase resinous structure according to claim 18, wherein the melting and kneading is executed at a shear rate of more than 500 $sec^{-1}$.

21. A process for preparing a multi-phase resinous structure according to any of claims 18 to 20, wherein the melting and kneading is executed using a multiple screw extruder with engaged screws.

**Patentansprüche**

1. Multiphasenharzstruktur, umfassend:

(A) 30 bis 60 Gew.-% eines aliphatischen Polyamids mit einer Schmelzviskosität μA zwischen 5 und 5000 $Nsm^{-2}$ (50 und 50 000 Poise) einschließlich,

(B) 35 bis 55 Gew.-% eines Polyphenylenethers mit einer Schmelzviskosität μB größer als μA, welche liegt zwischen 500 und 50 000 $Nsm^{-2}$ (5000 und 500 000 Poise) einschließlich (μA und μB gemessen bei einer Temperatur von 300°C und bei einer Scherrate von 1000 $s^{-1}$), welcher wenigstens ein Polymeres, Copolymeres oder modifiziertes (Co)Polymeres ist, ausgewählt aus den Polymeren von monocyclischen Phenolen der fol genden allgemeinen Formel

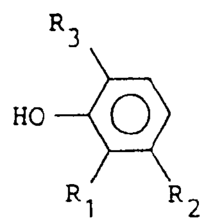

worin $R_1$ für eine Alkylgruppe mit 1 bis 3 Kohlenstoffatomen steht und $R_2$ und $R_3$ für das Wasserstoffatom oder eine Alkylgruppe mit 1 bis 3 Kohlenstoff atomen stehen,

(C) 5 bis 20 Gew.-% eines Dienblockcopolymeren vom Typ A-B-A′ mit einer Dienkomponente von 50 bis 95 Gew.-% (worin A und A′ für polymerisierte vinyl aromatische Kohlenwasserstoffblöcke derselben Art oder verschiedener Arten steht und 9 für einen Block eines konjugierten Diens steht), geknetet zur Bildung von

(A) + (B) + (C) = 100 Gew.-%, wobei die Matrixphase durch das (A) aliphatische Polyamid gebildet wird, die primäre dispergierte Phase durch den (B) Polyphenylenether, der in der Matrixphase dispergiert werden soll, gebildet wird, und die sekundäre dispergiete Phase durch das (C) Dienblockcopolymere gebildet wird, welches weiter in der primären dispergierten Phase dispergiert werden soll.

2. Multiphasenharzstruktur nach Anspruch 1, worin μA und μB folgende Gleichungen erfüllen:

10 $Nsm^{-2}$(100 Poise) ≦ μA ≦ 4500 $Nsm^{-2}$ ( 45000 Poise)

600 $Nsm^{-2}$(6000 Poise) ≦ μB ≦ 40000$Nsm^{-2}$ (400000 Poise)

3. Multiphasenharzstruktur nach Anspruch 2, worin μA und uB folgende Gleichungen erfüllen:

20 $Nsm^{-2}$ (200 Poise) ≦ μA ≦ 4000 $Nsm^{-2}$ ( 40000 Poise)

700 $Nsm^{-2}$ (7000 Poise) ≦ μB ≦ 30000 $Nsm^{-2}$ (300000 Poise)

4. Multiphasenharzstruktur nach einem der vorhergehenden Ansprüche, worin das (A) aliphatische Polyamid wenig stens eine Verbindung, ausgewählt aus Polycaproamid (Nylon 6), Polyhexamethylenadipamid (Nylon 66), Polyhexamethylensebacamid (Nylon 610), Polyhexamethylendodecamid (Nylon 612), Polyundecanamid (Nylon 11), Polydodecanamid (Nylon 12), deren Copolyamiden und gemischten Polyamiden, ist.

5. Multiphasenharzstruktur nach Anspruch 4, worin das aliphatische Polyamid Nylon 6 und/oder Nylon 66 ist.

6. Multiphasenharzstruktur nach einem der vorhergehenden Ansprüche, worin der (B) Polyphenylenether wenigstens eine Verbindung, ausgewählt aus Poly(2,6-dimethyl-1,4-phenylen)ether, Poly(2,6-diethyl-1,4-phenylen)ether, Poly(2,6-dipropyl-1,4-phenylen)ether, Poly(2-methyl-6-propyl-1,4-phenylen)ether, Poly(2-ethyl-6-propyl-1,4-phenylen)ether, 2,6-Dimethylphenol/2,3,6-Trimethylphenolcopolymerem, 2,6-Diethylphenol/2,3,6-Trimethylphenolcopolymerem und 2,6-Dipropylphenol/2,3,6-Trimethylphenolcopolymerem, ist.

7. Multiphasenharzstruktur nach Anspruch 6, worin der (B) Polyphenylenether Poly(2,6-dimethyl-1,4-phenylen)-ether und/oder 2,6-Dimethylphenol/2,3,6-Trimethylphenolcopolymeres ist.

8. Multiphasenharzstruktur nach Anspruch 1, worin das modifizierte (Co)Polymere eines Polyphenylenethers durch Reagierenlassen einer α,β-ungesättigten Ver bindung mit einem Polyphenylenether erhalten wird.

9. Multiphasenharzstruktur nach Anspruch 8, worin die α,β-ungesättigte Verbindung wenigstens eine Verbindung, ausgewählt unter Maleinsäureanhydrid, Itaconsäureanhydrid, Glutaconsäureanhydrid, Citraconsäureanhydrid, Acrylsäure, Methacrylsäure, Maleinsäure, Fumarsäure, Itaconsäure, Crotonsäure, Methylmaleinsäure, Methylfumarsäure, Citraconsäure, Methylhydrogenmaleat und Methylhydrogenitaconat, ist, und in einer Menge von 0,1 bis 10 Gew.-%, bezogen auf das Gewicht des Polyphenylenethers verwendet wird.

10. Multiphasenharzstruktur nach Anspruch 8, worin das modifizierte Polyphenylenether-(co)polymere durch Reagierenlassen einer α,β-ungesättigten Verbindung mit einem Polyphenylenether in Anwesenheit eines radikalischen Initiators erhalten wird.

11. Multiphasenharzstruktur nach Anspruch 13, worin der radikalische Initiator wenigstens eine Verbindung, ausgewählt aus Benzoylperoxid, Dicumylperoxid, Di-t-butylperoxid, t-Butylhydroperoxid, Cumenhydroperoxid, Dimethyl-di-(t-butylperoxy)hexan, Dimethyl-di-(t-butylperoxy)hexin, Azobisisobutyronitril, Azobis (cyclohexancarbonitril) und Azobis-(dimethylvaleronitril), ist.

12. Multiphasenharzstruktur nach einem der vorangehenden Ansprüche, worin die A und A' des (C) Dienblockcopolymeren vom Typ A-B-A′ für Blöcke auf Polystyrolbasis stehen, und B für einen Block auf Polybutadienbasis steht.

13. Multiphasenharzstruktur nach einem der Ansprüche 1 bis 11, worin die A und A' des (C) Dienblockcopolymeren vom Typ A-B-A′ Blöcke auf Polystyrolbasis sind, und 9 für einen Block auf Polyisoprenbasis steht.

14. Multiphasenharzstruktur nach einem der vorhergehenden Ansprüche, welche aus 35 bis 55 Gew.-% eines aliphatischen Polyamids, 38 bis 52 Gew.-% eines Polyphenylenethers und 7 bis 17 Gew.-% eines A-B-A′-Dienblockcopolymeren steht.

15. Multiphasenharzstruktur nach Anspruch 14, welche aus 40 bis 50 Gew.-% eines aliphatischen Polyamids, 40 bis 50 Gew.-% eines Polyphenylenethers und 10 bis 15 Gew.-% eines Dienblockcopolymeren vom Typ A-B-A′ besteht.

16. Multiphasenharzstruktur nach einem der vorhergehenden Ansprüche, worin die maximale Teilchengröße der durch einen Polyphenylenether gebildeten primären dispergierten Phase im Bereich von etwa 0,5 bis 30 μm liegt.

17. Multiphasenharzstruktur nach Anspruch 16, worin die maximale Teilchengröße der durch einen Polyphenylenether gebildeten primären dispergierten Phase in einem Bereich von etwa 1 bis 20 μM liegt.

18. Verfahren zur Herstellung einer Multiphasenharzstruktur mit durch (A) ein aliphatisches Polyamid gebildeter Matrixphase, durch (B) einen Polyphenylenether gebildeter primärer dispergierter Phase, welche in der Matrix dispergiert ist, und durch (C) ein Dienblockcopoly meres gebildeter sekundärer dispergierter Phase, welche in der primären dispergierten Phase weiter dispergiert ist, umfassend die Stufe des Schmelzens und Knetens der in Anspruch 1 genannten Komponenten (A), (B) und (C) in den in diesem Anspruch angegebenen Verhältnissen unter Bildung von (A) + (B) + (C) = 100 Gew.-%, bei einer Scherrate von 100 $sec^{-1}$ oder mehr und bei einer Temperatur von 270 bis 340°C unter Verwendung eines Extruders.

19. Verfahren zur Herstellung einer Multiphasenharzstruktur nach Anspruch 18, worin das Schmelzen und Kneten bei einer Scherrate von mehr als 300 $sec^{-1}$ durchgeführt wird.

20. Verfahren zur Herstellung einer Multiphasenharzstruktur nach Anspruch 18, worin das Schmelzen und Kneten bei einer Scherrate von mehr als 500 $sec^{-1}$ durchgeführt wird.

21. Verfahren zur Herstellung einer Multiphasenharzstruktur nach einem der Ansprüche 18 bis 20, worin das Schmelzen und Kneten unter Verwendung eines Mehrfachschnecken-extruders mit in Eingriff stehenden Schnecken durchge führt wird.

## Revendications

1. Structure résineuse multiphasée comprenant

(A) 30 à 60% en poids d'un polyamide aliphatique ayant une viscosité en phase fondue μA entre 5 et 5.000 $Nsm^{-2}$ (50 et 50.000 poises) inclus

(B) 35 à 55% en poids d'un polyphénylène ether ayant une viscosité en phase fondue μB plus importante que μA et qui se trouve entre 500 et 50.000 $Nsm^{-2}$ (5.000 et 50.000 poises) inclus (μA et μB étant mesurés à une température de 300°C et à un taux de cisaillement de 1.000 $s^{-1}$), étant au moins un polymère, copolymère ou (co)polymère modifié choisi parmi les polymères de phénols monocycliques représentés par la formule générale qui suit

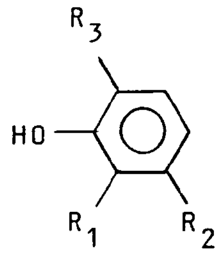

où $R_1$ indique un groupe alkyle ayant 1 à 3 atomes de carbone et $R_2$ et $R_3$ indiquent l'atome d'hydrogène ou bien un groupe alkyle ayant 1 à 3 atomes de carbone

(C) 5 à 20% en poids d'un copolymère diène séquencé du type A-B-A' avec un composant diène de 50 à 95% en poids (où A et A' indiquent des blocs d'hydrocarbure aromatique vinylique polymérises de la même sorte ou de sortes différentes, et B indique un bloc d'un diène conjugué),malaxés pour obtenir

(A) + (B) + (C) : 100 % en poids avec la phase de la matrice formée par le polyamide aliphatique (A), la phase dispersée primaire formée par le polyphénylène éther (B) à disperser dans la phase de la matrice et la phase dispersée secondaire formée par le copolymère diène séquencé (C) à disperser encore dans la phase dispersée primaire.

2. Structure résineuse multiphasée selon la revendication 1, où μA et μB satisfont aux formules suivantes : 10 $NSm^{-2}$ (100 poises)≦ μA ≦ 4.500 $NSm^{-2}$ (45.000 poises) 600 $NSM^{-2}$ (6.000 poises)≦ μB ≦ 40.000 $NSm^{-2}$ (400.000 poises).

3. Structure résineuse multiphasée selon la revendication 2, où μA et μB satisfont aux formules suivantes : 20 $NSm^{-2}$ (200 poises) ≦ μA ≦ 4.000 $NSm^{-2}$ (40.000 poises) 700 $NSm^{-2}$ (7.000 poises)≦ μB ≦ 30.000 $NSm^{-2}$ (300.000 poises).

4. Structure résineuse multiphasée selon toute revendication précédente, où le polyamide aliphatique (A) est au moins un choisi parmi le polycaproamide (nylon 6), le polyhexaméthylène adipamide (nylon 66), le polyhexaméthylène sébaçamide (nylon 610), le polyhexaméthylène dodécamide (nylon 612), le polyundécanamide (nylon 11), le polydodécanamide (nylon 12), leurs copolyamides et polyamides mélangés.

5. Structure résineuse multiphasée selon la revendication 4, où le polyamide aliphatique est nylon 6 et/ou nylon 66.

6. Structure résineuse multiphasée selon toute revendication précédente, où le polyphénylène éther (B) est au moins un choisi parmi poly(2,6-diméthyl-1,4-phenylène)éther, poly(2,6-diéthyl-1,4-phénylène)éther, poly(2,6-dipropyl-1,4-phénylène)éther, poly(2-méthyl-6-propyl-1,4-phénylène)éther, poly(2-éthyl-6-propyl-1,4-phénylène)éther, copolymère de 2,6-diméthylphénol/2,3,6-triméthylphénol, copolymère de 2,6-diéthylphénol/ 2,3,6-triméthylphenol et copolymère de 2,6-dipropylphénol/2,3,6-triméthylphénol.

7. Structure résineuse multiphasée selon la revendication 6, où le polyphénylène éther (B) est le poly(2,6-diméthyl-1,4-phénylène)éther et/ou un copolymère de 2,6-dimethylphenol/2,3,6-triméthylphenol.

8. Structure résineuse multiphasée selon la revendication 1, où le (co)polymère modifié d'un polyphénylène éther est obtenu en permettant à un composé α,β-insaturé de réagir avec un polyphénylène éther.

9. Structure résineuse multiphasée selon la revendication 8, où le composé α,β-insaturé est au moins choisi parmi l'anhydride maléique, l'anhydride itaconique, l'anhydride glutaconique, l'anhydride citraconique, l'acide acrylique, l'acide méthacrylique, l'acide maléique, l'acide fumarique, l'acide itaconique, l'acide crotonique, l'acide méthylmaléique, l'acide méthylfumarique, l'acide citraconique, l'hydrogénomaléate de méthyle et l'hydrogénoitaconate de méthyle et on l'utilise en une quantité de 0,1 à 10% en poids en se basant sur le poids du polyphénylène éther.

10. Structure résineuse multiphasée selon la revendication 8, où le (co)polymère de polyphénylène éther modifié est obtenu en laissant un composé α,β-insaturé réagir avec un polyphénylène éther en présence d'un initiateur de radicaux.

11. Structure résineuse multiphasée selon la revendication 13, où l'initiateur de radicaux est au moins un

choisi parmi le peroxyde de benzoyle, le peroxyde de dicumyle, le di-t-butyl peroxyde, le t-butyl-hydroperoxyde, l'hydroperoxyde de cumène, le diméthyldi-(t-butylperoxy)hexane, la diméthyl-di-(t-butylperoxy)hexyne, l'azobisisobutyronitrile, l'azobis(cyclohexanecarbonitrile) et l'azobis(dimethylvaléronitrile).

12. Structure résineuse multiphasée selon toute revendication précédente, où A et A′ du copolymère diène séquencé du type A-B-A′ (C) indiquent des blocs à base de polystyrène, et B indique un bloc à base de polybutadiène.

13. Structure résineuse multiphasée selon l'une des revendications 1 à 11, où A et A′ du copolymère diène séquencé du type A-B-A′ (C) sont des blocs à base de polystyrène et B indique un bloc à base de polyisoprène. .

14. Structure résineuse multiphasée selon toute revendication précédente, qui se compose de 35 à 55% en poids d'un polyamide aliphatique, de 38 à 52% en poids d'un polyphénylène éther et de 7 à 17% en poids d'un copolymère diène séquencé A-B-A′.

15. Structure résineuse multiphasée selon la revendication 14,qui se compose de 40 à 50% en poids d'un polyamide aliphatique,de 40 à 50% en poids d'un polyphénylène éther et de 10 à 15% en poids d'un copolymère diène séquencé du type A-B-A′.

16. Structure résineuse multiphasée selon toute revendication précédente, où la taille maximale des particules de la phase dispersée primaire formée par un polyphénylène éther est comprise entre environ 0,5 et 30 μm.

17. Structure résineuse multiphasée selon la revendication 16, où la taille maximale des particules de la phase dispersée primaire formée d'un polyphénylène éther est comprise entre environ 1 et 20 μ.

18. Procédé de préparation d'une structure résineuse multiphasée ayant une phase de matrice formée de (A) un polyamide aliphatique, une phase dispersée primaire dispersée dans la matrice formée d'un polyphénylène éther (B) et une phase dispersée secondaire, encore dispersée dans la phase dispersée primaire, formée d'un copolymère diène séquencé (C), comprenant l'étape de faire fondre et de malaxer les composants (A), (B) et (C) indiqués à la revendication 1 aux proportions indiquées dans cette revendication, pour obtenir (A) + (B) + (C) = 100% en poids, à un taux de cisaillement de 100 $s^{-1}$ ou plus et à une température de 270 à 340°C, en utilisant une extrudeuse.

19. Procédé de préparation d'une structure résineuse multiphasée selon la revendication 18, où la fusion et le malaxage sont exécutés à un taux de cisaillement supérieur à 300 $s^{-1}$.

20. Procédé de préparation d'une structure résineuse multiphasée selon la revendication 18, où la fusion et le malaxage sont exécutés à un taux de cisaillement supérieur à 500 $s^{-1}$.

21. Procédé de préparation d'une structure résineuse multiphasée selon l'une quelconque des revendications 18 à 20, où la fusion et le malaxage sont exécutés en utilisant une extrudeuse à plusieurs vis avec des vis engagées.

Fig.1

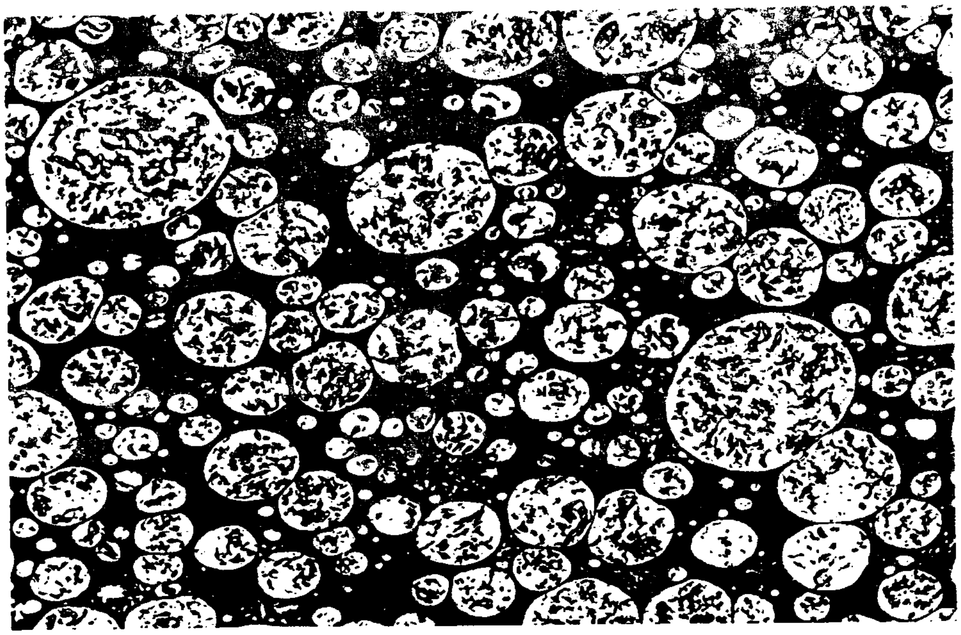

10 μm

Fig.2

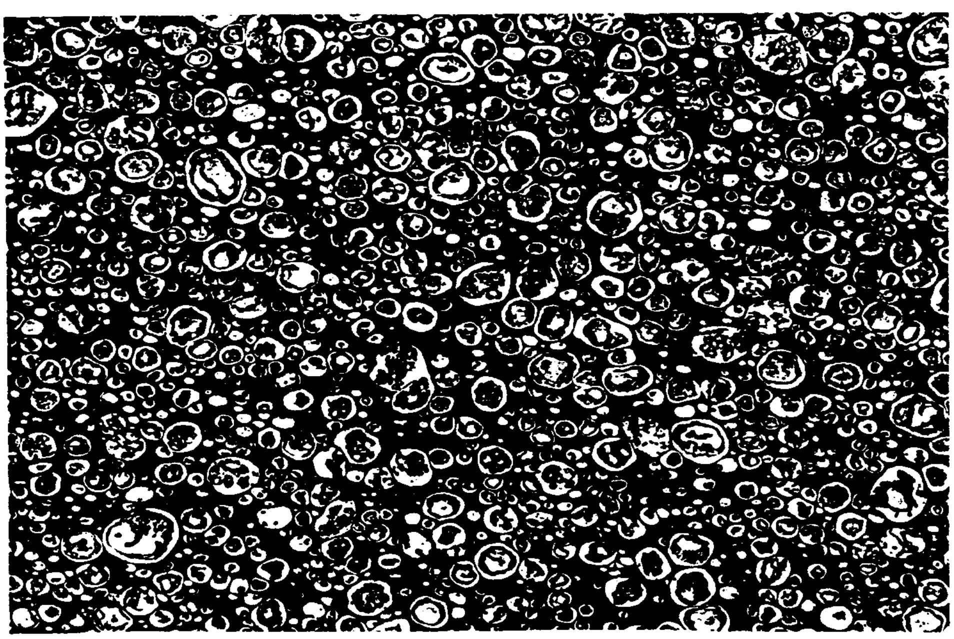

10 μm